(19)

Europäisches
Patentamt
European
Patent Office
Office européen
des brevets

(11) **EP 4 697 258 A1**

(12) **EUROPEAN PATENT APPLICATION**
published in accordance with Art. 153(4) EPC

(43) Date of publication:
**18.02.2026  Bulletin 2026/08**

(21) Application number: **24806459.4**

(22) Date of filing: **10.05.2024**

(51) International Patent Classification (IPC):
***G06T 3/60*** (2024.01)

(52) Cooperative Patent Classification (CPC):
**G06T 19/20; G06T 2219/2016**

(86) International application number:
**PCT/CN2024/092219**

(87) International publication number:
**WO 2024/235107 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023  CN 202310540964**

(71) Applicant: **Huawei Technologies Co., Ltd.
Shenzhen, Guangdong 518129 (CN)**

(72) Inventors:
• **LI, Zhihao
  Shenzhen, Guangdong 518129 (CN)**

• **GU, Kerui
  Shenzhen, Guangdong 518129 (CN)**
• **LIU, Shiyong
  Shenzhen, Guangdong 518129 (CN)**
• **LIU, Jianzhuang
  Shenzhen, Guangdong 518129 (CN)**
• **XU, Songcen
  Shenzhen, Guangdong 518129 (CN)**
• **YAN, Youliang
  Shenzhen, Guangdong 518129 (CN)**
• **MI, Michael Bi
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **OBJECT MODEL ROTATION METHOD AND RELATED DEVICE THEREOF**

(57)    This application discloses an object model rotation method and a related device thereof. A target model provided in the method can accurately complete rotation estimation, to accurately complete rotation of an object model. The method in this application includes: After information about a target object in a first state is obtained, the information may be input into the target model. Next, the information may be processed by using the target model, to obtain a first matrix, where the first matrix is an n-order matrix, and n is a positive integer greater than or equal to 2. Then, the first matrix may be orthogonalized to obtain a second matrix, where the second matrix is an n-order rotation matrix. Finally, a preset n-dimensional model of the target object may be rotated directly based on the second matrix, to obtain a rotated n-dimensional model of the target object. The preset n-dimensional model of the target object indicates the target object in a second state, and the rotated n-dimensional model of the target object indicates the target object in the first state.

```
┌─────────────────────────────────────────┐
│ Obtain information about a target object │──401
│ in a first state                         │
└─────────────────────────────────────────┘
                    │
                    ▼
┌─────────────────────────────────────────┐
│ Process the information by using a target│──402
│ model, to obtain a first matrix, where   │
│ the first matrix is an n-order matrix, and│
│ n is a positive integer greater than or  │
│ equal to 2                               │
└─────────────────────────────────────────┘
                    │
                    ▼
┌─────────────────────────────────────────┐
│ Orthogonalize the first matrix to obtain │──403
│ a second matrix, where the second matrix │
│ is an n-order rotation matrix            │
└─────────────────────────────────────────┘
                    │
                    ▼
┌─────────────────────────────────────────┐
│ Rotate a preset n-dimensional model of   │
│ the target object based on the second    │
│ matrix, to obtain a rotated n-           │──404
│ dimensional model of the target object,  │
│ where the preset n-dimensional model     │
│ indicates the target object in a second  │
│ state, and the rotated n-dimensional     │
│ model indicates the target object in the │
│ first state                              │
└─────────────────────────────────────────┘
```

FIG. 4

Processed by Luminess, 75001 PARIS (FR)

EP 4 697 258 A1

## Description

This application claims priority to Chinese Patent Application No. 202310540964.4, filed with the China National Intellectual Property Administration on May 12, 2023 and entitled "OBJECT MODEL ROTATION METHOD AND RELATED DEVICE THEREOF", which is incorporated herein by reference in its entirety.

## TECHNICAL FIELD

Embodiments of this application relate to the field of artificial intelligence (artificial intelligence, AI), and in particular, to an object model rotation method and a related device thereof.

## BACKGROUND

In various computer vision tasks, rotation estimation is one of the most important and difficult links in these tasks. In rotation estimation, a rotation matrix is usually used to describe a rotation change between an object in a current state and the object in an initial state.

In a related technology, after information associated with an object is obtained, the information may be input into a neural network model to process the information by using the neural network model, to obtain a $3\times2$ matrix, and then gram-schmidt orthogonalization (gram-schmidt orthogonalization, GS) processing is performed on the matrix, to obtain a $3\times3$ rotation matrix. In this way, the rotation matrix may be used to rotate a three-dimensional (3 dimensions, 3D) model (representing the object in the initial state) of the object, to obtain a rotated three-dimensional model (representing the object in the current state) of the object.

In the foregoing training process of the neural network model, because an output of the model is the $3\times2$ matrix, GS processing needs to be performed to obtain the $3\times3$ rotation matrix, so as to complete training of the neural network model based on the rotation matrix. However, GS processing is not conducive to the model training process, and consequently, performance of the neural network model obtained through training is poor. In other words, the neural network model cannot accurately complete rotation estimation. As a result, rotation of an object model cannot be accurately completed.

## SUMMARY

Embodiments of this application provide an object model rotation method and a related device thereof. A target model provided in the method can accurately complete rotation estimation, to accurately complete rotation of an object model.

A first aspect of embodiments of this application provides an object model rotation method. The method includes:

When object model rotation needs to be performed for a target object, information about the target object in a first state (for example, a current state or a real-time state) may be first obtained.

After the information about the target object in the first state is obtained, the information about the target object in the first state may be input into a target model to perform a series of processing on the information about the target object in the first state by using the target model, to obtain a first matrix. It should be noted that the first matrix output by the target model is an n-order matrix. In other words, the first matrix is a matrix with n rows and n columns.

Because the first matrix is a pseudo rotation matrix rather than a real rotation matrix, if the first matrix is directly used to rotate an n-dimensional model of the target object, the model is distorted. Therefore, unbiased Gram-Schmidt orthogonalization (Unbiased Gram-Schmidt Orthogonalization) may be performed on the first matrix, to obtain a second matrix. It should be noted that the second matrix is an n-order rotation matrix. In other words, the second matrix is a rotation matrix with n rows and n columns.

After the second matrix is obtained, the preset n-dimensional model of the target object may be rotated directly by using the second matrix, to obtain a rotated n-dimensional model of the target object. It should be noted that the preset n-dimensional model of the target object indicates the target object in a second state (for example, a preset state or an initial state), and the rotated n-dimensional model of the target object indicates the target object in the first state. In this way, object model rotation for the target object is completed.

It can be learned from the foregoing method that when object model rotation needs to be performed on the target object, the information about the target object in the first state may be first obtained, and the information is input into the target model. Next, the information may be processed by using a target model, to obtain a first matrix, where the first matrix is an n-order matrix, and n is a positive integer greater than or equal to 2. Then, the first matrix may be orthogonalized to obtain the second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an $n \times n$ matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

In a possible implementation, the first matrix includes n first column vectors, the second matrix includes n second column vectors, and orthogonalizing the first matrix, to obtain the second matrix corresponding to the target object includes: performing first calculation on the $1^{st}$ first column vector to an $n^{th}$ first column vector, to obtain the $1^{st}$ second column vector; performing second calculation on the $1^{st}$ second column vector to an $(i-1)^{th}$ second column vector and an $i^{th}$ first column vector to the $n^{th}$ first column vector, to obtain an $i^{th}$ second column vector, where i=2, ..., n-1; and performing third calculation on the $1^{st}$ second column vector to the $(n-1)^{th}$ second column vector, to obtain an $n^{th}$ second column vector. In the foregoing implementation, after the n first column vectors of the first matrix are obtained, first calculation may be performed on the $1^{st}$ first column vector to the $n^{th}$ first column vector, to obtain the $1^{st}$ second column vector. After the $1^{st}$ second column vector is obtained, second calculation may be performed on the $1^{st}$ second column vector and the $2^{nd}$ first column vector to the $n^{th}$ first column vector, to obtain the $2^{nd}$ second column vector. After the $2^{nd}$ second column vector is obtained, second calculation may be performed on the $1^{st}$ second column vector to the $2^{nd}$ second column vector, and the $3^{rd}$ first column vector to the $n^{th}$ first column vector, to obtain the $3^{rd}$ second column vector, ...; and after an $(n-2)^{th}$ second column vector is obtained, second calculation may be performed on the $1^{st}$ second column vector to the $(n-2)^{th}$ second column vector, and an $(n-1)^{th}$ first column vector to the $n^{th}$ first column vector, to obtain the $(n-1)^{th}$ second column vector. Finally, because the $1^{st}$ second column vector to the $(n-1)^{th}$ second column vector have been obtained, third calculation may be performed on the $1^{st}$ second column vector to the $(n-1)^{th}$ second column vector, to obtain the $n^{th}$ second column vector. It can be learned that, in the unbiased Gram-Schmidt orthogonalization manner provided in this embodiment of this application, the first matrix that is the n-order ordinary matrix can be successfully converted into the second matrix that is the n-order rotation matrix.

In a possible implementation, after the n first column vectors are obtained, cross multiplication may be performed on the $2^{nd}$ first column vector to the $n^{th}$ first column vector, to obtain the $1^{st}$ third column vector. After the $1^{st}$ third column vector is obtained, weighted averaging may be performed on the $1^{st}$ third column vector and the $1^{st}$ first column vector, to obtain the $1^{st}$ fourth column vector. After the $1^{st}$ fourth column vector is obtained, the $1^{st}$ fourth column vector may be normalized, to obtain the $1^{st}$ second column vector.

In a possible implementation, after the $(i-1)^{th}$ second column vector is obtained, cross multiplication may be performed on the $1^{st}$ second column vector to the $(i-1)^{th}$ second column vector and an $(i+1)^{th}$ first column vector to the $n^{th}$ first column vector, to obtain an $i^{th}$ third column vector. After the $i^{th}$ third column vector is obtained, the $i^{th}$ third column vector and the $i^{th}$ first column vector may be averaged, to obtain an $i^{th}$ fourth column vector. After the $i^{th}$ fourth column vector is obtained, the $i^{th}$ fourth column vector may be projected to the $1^{st}$ second column vector to the $(i-1)^{th}$ second column vector, and projection results are added, to obtain an $i^{th}$ fifth column vector. After the $i^{th}$ fifth column vector is obtained, the $i^{th}$ fifth column vector may be subtracted from the $i^{th}$ fourth column vector, to obtain an $i^{th}$ sixth column vector. After the $i^{th}$ sixth column vector is obtained, the $i^{th}$ sixth column vector is normalized, to obtain the $i^{th}$ second column vector. Because i=2, ..., i-1, the foregoing process is repeatedly performed, and the $1^{st}$ second column vector to the $(n-1)^{th}$ second column vector can be finally obtained.

In a possible implementation, because the $1^{st}$ second column vector to the $(n-1)^{th}$ second column vector have been obtained, cross multiplication may be performed on the $1^{st}$ second column vector to the $(n-1)^{th}$ second column vector, to obtain the $n^{th}$ second column vector.

In a possible implementation, the n second column vectors meet at least one of the following conditions: the n second column vectors are orthogonal to each other; a magnitude of each of the n second column vectors is 1; and the n second column vectors form an n-dimensional coordinate system.

In a possible implementation, the information about the target object in the first state includes two types of information. A first type of information is the information about the target object in the first state, and a second type of information is information collected by the target object in the first state. The first type of information may be n-dimensional data of the target object in the first state, and the second type of information may be n-dimensional data collected by the target object in the first state.

A second aspect of embodiments of this application provides a model training method. The method includes: obtaining information about a target object in a first state; processing the information by using a target model, to obtain a first matrix, where the first matrix is an n-order matrix, n is a positive integer greater than or equal to 2, the first matrix is used to obtain a rotated n-dimensional model of the target object, and the rotated n-dimensional model indicates the target object in the first state; obtaining a target loss based on the first matrix; and training the to-be-trained model based on the target loss, to obtain a target model.

The target model obtained through training by using the foregoing method has a rotation estimation function. Specifically, when object model rotation needs to be performed on the target object, the information about the target object in the first state may be first obtained, and the information is input into the target model. Next, the information may be processed by using the target model, to obtain the first matrix, where the first matrix is an n-order matrix, and n is a positive integer greater than or equal to 2. Then, the first matrix may be orthogonalized to obtain a second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an n×n matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

In a possible implementation, obtaining the target loss based on the first matrix includes: rotating a preset n-dimensional model of the target object directly by using the first matrix, to obtain the rotated n-dimensional model of the target object, where the preset n-dimensional model indicates the target object in a second state; and obtaining the target loss based on the rotated n-dimensional model and a rotated real n-dimensional model of the target object, where the rotated real n-dimensional model indicates the target object in the first state, and the target loss indicates a difference between the rotated n-dimensional model and the rotated real n-dimensional model.

In a possible implementation, obtaining the target loss based on the first matrix includes: obtaining the target loss based on the first matrix and a real matrix, where the target loss indicates a difference between the first matrix and the real matrix, and the real matrix is an n-order matrix.

In a possible implementation, the information includes at least one of the following: n-dimensional data of the target object in the first state and n-dimensional data collected by the target object in the first state.

A third aspect of embodiments of this application provides an object model rotation apparatus. The apparatus includes: an obtaining module, configured to obtain information about a target object in a first state; a processing module, configured to process the information by using a target model, to obtain a first matrix, where the first matrix is an n-order matrix, and n is a positive integer greater than or equal to 2; an orthogonalization module, configured to orthogonalize the first matrix, to obtain a second matrix, where the second matrix is an n-order rotation matrix; and a rotation module, configured to rotate a preset n-dimensional model of the target object based on the second matrix, to obtain a rotated n-dimensional model of the target object, where the preset n-dimensional model indicates the target object in a second state, and the rotated n-dimensional model indicates the target object in the first state.

It can be learned from the foregoing apparatus that when object model rotation needs to be performed on the target object, the information about the target object in the first state may be first obtained, and the information is input into the target model. Next, the information may be processed by using the target model, to obtain the first matrix, where the first matrix is an n-order matrix, and n is a positive integer greater than or equal to 2. Then, the first matrix may be orthogonalized to obtain the second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an n×n matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

In a possible implementation, the first matrix includes n first column vectors, the second matrix includes n second column vectors, and the orthogonalization module is configured to: perform first calculation on the $1^{st}$ first column vector to an $n^{th}$ first column vector, to obtain the $1^{st}$ second column vector; perform second calculation on the $1^{st}$ second column vector to an $(i-1)^{th}$ second column vector and an $i^{th}$ first column vector to the $n^{th}$ first column vector, to obtain an $i^{th}$ second column vector, where i=2, ..., n-1; and perform third calculation on the $1^{st}$ second column vector to the $(n-1)^{th}$ second column vector, to obtain an $n^{th}$ second column vector.

In a possible implementation, the orthogonalization module is configured to: perform cross multiplication on the $2^{nd}$ first column vector to the $n^{th}$ first column vector, to obtain the $1^{st}$ third column vector; perform weighted averaging on the $1^{st}$ third column vector and the $1^{st}$ first column vector, to obtain the $1^{st}$ fourth column vector; and normalize the $1^{st}$ fourth column vector, to obtain the $1^{st}$ second column vector.

In a possible implementation, the orthogonalization module is configured to: perform cross multiplication on the $1^{st}$ second column vector to the $(i-1)^{th}$ second column vector and an $(i+1)^{th}$ first column vector to the $n^{th}$ first column vector, to obtain an $i^{th}$ third column vector; average the $i^{th}$ third column vector and the $i^{th}$ first column vector, to obtain an $i^{th}$ fourth column vector; project the $i^{th}$ fourth column vector to the $1^{st}$ second column vector to the $(i-1)^{th}$ second column vector, and add projection results, to obtain an $i^{th}$ fifth column vector; subtract the $i^{th}$ fifth column vector from the $i^{th}$ fourth column vector, to obtain an $i^{th}$ sixth column vector; and normalize the $i^{th}$ sixth column vector, to obtain the $i^{th}$ second column vector.

In a possible implementation, the orthogonalization module is configured to perform cross multiplication on the $1^{st}$ second column vector to the $(n-1)^{th}$ second column vector, to obtain the $n^{th}$ second column vector.

In a possible implementation, the n second column vectors meet at least one of the following conditions: the n second column vectors are orthogonal to each other; a magnitude of each of the n second column vectors is 1; and the n second column vectors form an n-dimensional coordinate system.

In a possible implementation, the information includes at least one of the following: n-dimensional data of the target object in the first state and n-dimensional data collected by the target object in the first state.

A fourth aspect of embodiments of this application provides a model training apparatus. The apparatus includes: a first obtaining module, configured to obtain information about a target object in a first state; a processing module, configured to process the information by using a target model, to obtain a first matrix, where the first matrix is an n-order matrix, n is a positive integer greater than or equal to 2, the first matrix is used to obtain a rotated n-dimensional model of the target object, and the rotated n-dimensional model indicates the target object in the first state; a second obtaining module, configured to obtain a target loss based on the first matrix; and a training module, configured to train the to-be-trained model based on the target loss, to obtain a target model.

The target model obtained through training by using the foregoing apparatus has a rotation estimation function. Specifically, when object model rotation needs to be performed on the target object, the information about the target object in the first state may be first obtained, and the information is input into the target model. Next, the information may be processed by using the target model, to obtain the first matrix, where the first matrix is an n-order matrix, and n is a positive integer greater than or equal to 2. Then, the first matrix may be orthogonalized to obtain a second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an $n \times n$ matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

In a possible implementation, the second obtaining module is configured to: rotate a preset n-dimensional model of the target object directly by using the first matrix, to obtain the rotated n-dimensional model of the target object, where the preset n-dimensional model indicates the target object in a second state; and obtain the target loss based on the rotated n-dimensional model and a rotated real n-dimensional model of the target object, where the rotated real n-dimensional model indicates the target object in the first state, and the target loss indicates a difference between the rotated n-dimensional model and the rotated real n-dimensional model.

In a possible implementation, the second obtaining module is configured to obtain the target loss based on the first matrix and a real matrix, where the target loss indicates a difference between the first matrix and the real matrix, and the real matrix is an n-order matrix.

In a possible implementation, the information includes at least one of the following: n-dimensional data of the target object in the first state and n-dimensional data collected by the target object in the first state.

A fifth aspect of embodiments of this application provides an object model rotation apparatus. The apparatus includes a memory and a processor. The memory stores code, the processor is configured to execute the code, and when the code is executed, the object model rotation apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor. The processor is configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, when object model rotation needs to be performed on the target object, the information about the target object in the first state may be first obtained, and the information is input into the target model. Next, the information may be processed by using the target model, to obtain the first matrix, where the first matrix is an n-order matrix, and n is a positive integer greater than or equal to 2. Then, the first matrix may be orthogonalized to obtain the second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an $n \times n$ matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

## BRIEF DESCRIPTION OF DRAWINGS

FIG. 1 is a diagram of a structure of an artificial intelligence main framework;
FIG. 2a is a diagram of a structure of an object model rotation system according to an embodiment of this application;
FIG. 2b is a diagram of another structure of an object model rotation system according to an embodiment of this application;
FIG. 2c is a diagram of a device related to object model rotation according to an embodiment of this application;
FIG. 3 is a diagram of an architecture of a system 100 according to an embodiment of this application;
FIG. 4 is a schematic flowchart of an object model rotation method according to an embodiment of this application;
FIG. 5 is a diagram of an application example of an object model rotation method according to an embodiment of this application;
FIG. 6 is a schematic flowchart of a model training method according to an embodiment of this application;
FIG. 7 is a diagram of an application example of a model training method according to an embodiment of this application;
FIG. 8 is a diagram of a comparison result according to an embodiment of this application;
FIG. 9 is another diagram of a comparison result according to an embodiment of this application;
FIG. 10 is a diagram of a structure of an object model rotation apparatus according to an embodiment of this application;
FIG. 11 is a diagram of a structure of a model training apparatus according to an embodiment of this application;
FIG. 12 is a diagram of a structure of an execution device according to an embodiment of this application;
FIG. 13 is a diagram of a structure of a training device according to an embodiment of this application; and
FIG. 14 is a diagram of a structure of a chip according to an embodiment of this application.

## DESCRIPTION OF EMBODIMENTS

Embodiments of this application provide an object model rotation method and a related device thereof. A target model provided by the method can accurately complete rotation estimation, to accurately complete rotation of an object model.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner for describing objects having a same attribute in embodiments of this application. In addition, the terms "include", "have", and any other variant thereof mean to cover non-exclusive inclusion, so that a process, method, system, product, or device that includes a series of units is not necessarily limited to those units, but may include other units not expressly listed or inherent to such a process, method, system, product, or device.

In various computer vision tasks, rotation estimation is one of the most important and difficult links in these tasks. In rotation estimation, a rotation matrix is usually used to describe a rotation change between an object in a current state and the object in an initial state. For example, in three-dimensional human body action capture, the rotation matrix may be used to describe a rotation change between a three-dimensional model of a person and a three-dimensional model of a standard human body.

In a related technology, after information associated with an object is obtained, the information may be input into a neural network model to process the information by using the neural network model, to obtain a $3\times2$ matrix, and then GS processing is performed on the matrix, to restore the $3\times2$ matrix into a $3\times3$ rotation matrix. The rotation matrix is a rotation matrix corresponding to the object. In this way, the rotation matrix may be used to rotate a three-dimensional model of the object, to obtain a rotated three-dimensional model of the object.

In the foregoing training process of the neural network model, because an output of the model is the $3\times2$ matrix, GS processing needs to be performed to obtain the $3\times3$ rotation matrix, so as to complete training of the neural network model based on the rotation matrix. However, GS processing is not conducive to the model training process (for example, GS processing causes various problems such as gradient backflow, numerical gradient errors, and gradient explosion), and consequently, performance of the neural network model obtained through training is poor. In other words, the neural network model cannot accurately complete rotation estimation. As a result, rotation of an object model cannot be accurately completed.

To resolve the foregoing problem, an embodiment of this application provides an object model rotation method. The method may be implemented with reference to an artificial intelligence (artificial intelligence, AI) technology. The AI technology is a technical discipline that uses digital computers or machines controlled by digital computers to simulate, extend, and expand human intelligence. The AI technology obtains the best results by sensing the environment, obtaining knowledge, and using knowledge. In other words, the artificial intelligence technology is a branch of computer science, and seeks to learn essence of intelligence and produce a new intelligent machine that can react in a way similar to human intelligence. Using artificial intelligence to process data is a common application manner of artificial intelligence.

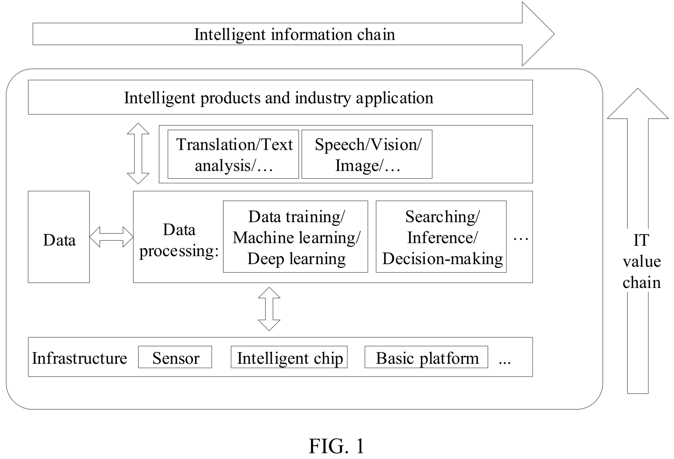

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, speech, and text, and further relates to Internet of Things data of a conventional device, including service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, sorting, and prediction.

(4) General capability

After data processing mentioned above is performed on data, some general capabilities may be further formed based on a data processing result, for example, an algorithm or a general system, such as translation, text analysis, computer vision processing, speech recognition, and image recognition.

(5) Intelligent products and industry application

The intelligent products and industry application are products and application of the artificial intelligence system in various fields and are encapsulation of the overall artificial intelligence solution and product implementation of intelligent information decision-making, to implement final application. Application fields of the intelligent products and industry application mainly include: intelligent terminals, intelligent transportation, intelligent health care, autonomous driving, smart cities, and the like.

The following describes several application scenarios of this application.

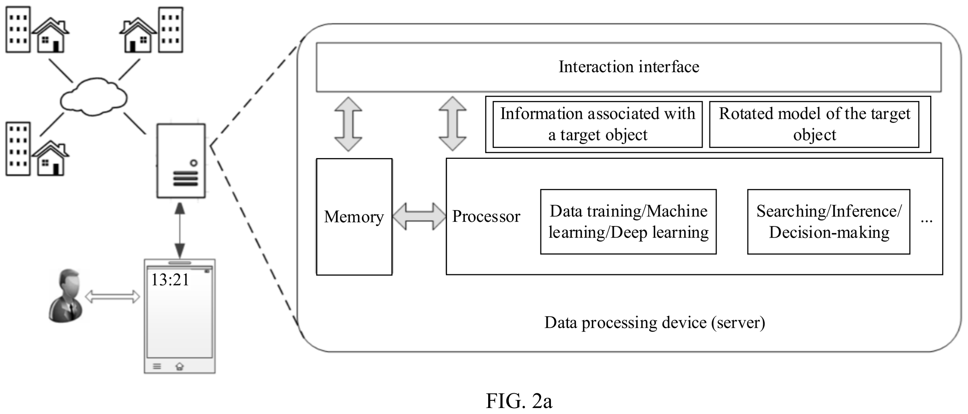

FIG. 2a is a diagram of a structure of an object model rotation system according to an embodiment of this application. The object model rotation system includes user equipment and a data processing device. The user equipment includes an intelligent terminal such as a mobile phone, a personal computer, or an information processing center. The user equipment is an initiator of object model rotation, and is used as an initiator of an object model rotation request. Generally, a user initiates a request by using the user equipment.

The data processing device may be a device or a server that has a data processing function, for example, a cloud server, a network server, an application server, or a management server. The data processing device receives the object model rotation request from the intelligent terminal by using an interaction interface, and then performs object model rotation in a manner such as machine learning, deep learning, searching, inference, and decision-making by using a memory that stores data and a processor that processes data. The memory in the data processing device may be a general name, and includes a local storage and a database that stores historical data. The database may be on the data processing device, or may be on another network server.

In the object model rotation system shown in FIG. 2a, the user equipment may receive an instruction of the user. For example, the user equipment may obtain information that is entered/selected by the user and that is associated with a target object, and then initiates a request to the data processing device, so that the data processing device executes an object model rotation application for the information that is from the user equipment and that is associated with the target object, to obtain a rotated model of the target object. For example, the user equipment may obtain the information that is entered by the user and that is associated with the target object (that is, information about the target object in a first state), and then the user equipment may initiate an object model rotation request to the data processing device, so that the data processing device performs, based on the object model rotation request, a series of processing on the information associated with the target object, to complete, based on a processing result of the information, rotation that needs to be performed on a preset n-dimensional model (indicating the target object in a second state) of the target object, so as to obtain a rotated n-dimensional model (indicating the target object in the first state) of the target object.

In FIG. 2a, the data processing device may perform an object model rotation method in embodiments of this application.

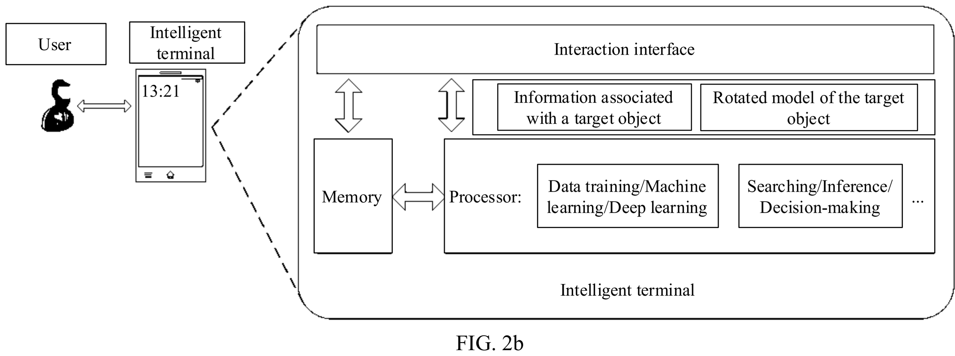

FIG. 2b is a diagram of another structure of an object model rotation system according to an embodiment of this application. In FIG. 2b, user equipment directly serves as a data processing device. The user equipment can directly obtain an input from a user, and the input is directly processed by hardware of the user equipment. A specific process is similar to that in FIG. 2a. For details, refer to the foregoing descriptions. Details are not described herein again.

In the object model rotation system shown in FIG. 2b, the user equipment may receive an instruction of the user. For example, the user equipment may obtain information that is entered by the user and that is associated with the target object (that is, information about the target object in the first state), and then the user equipment may perform a series of processing on the information associated with the target object, to complete, based on a processing result of the information, rotation that needs to be performed on the preset n-dimensional model (indicating the target object in the second state) of the target object, so as to obtain the rotated n-dimensional model (indicating the target object in the first state) of the target object.

In FIG. 2b, the user equipment may perform the object model rotation method in embodiments of this application.

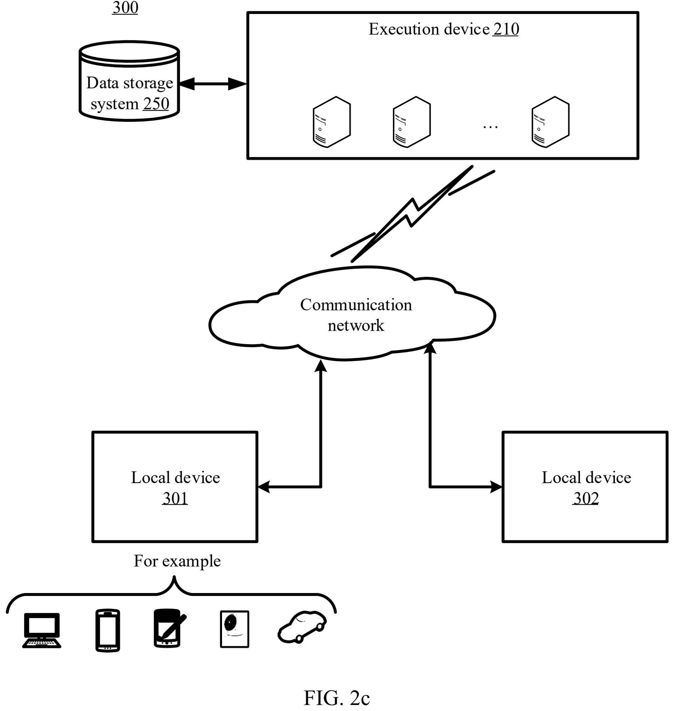

FIG. 2c is a diagram of a device related to object model rotation according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform object model rotation application for an image by using a model obtained through final data training or learning, to obtain a corresponding processing result.

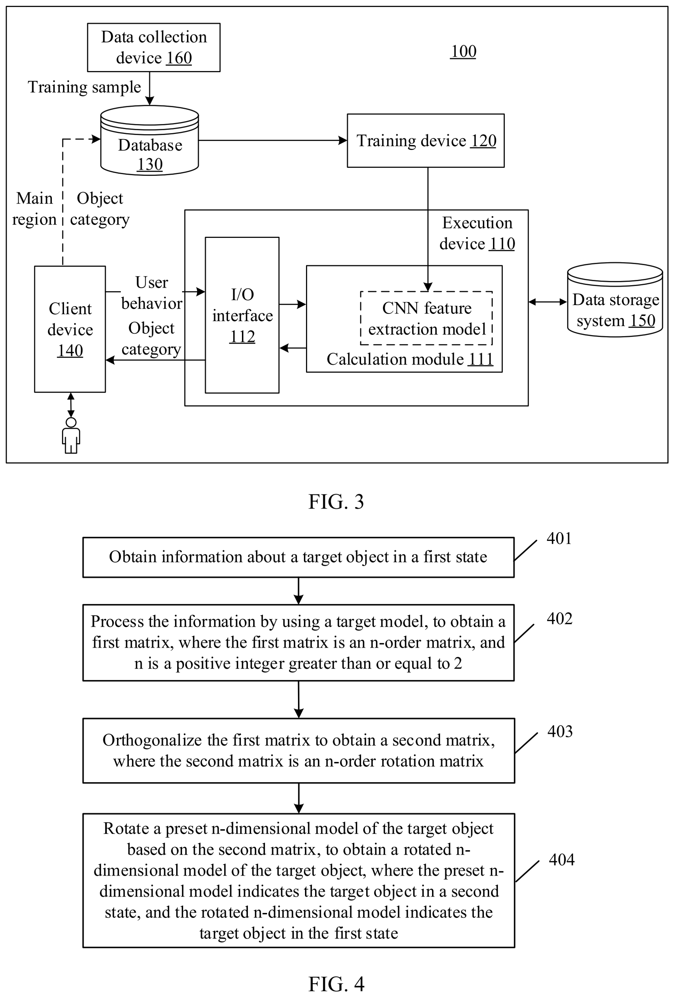

FIG. 3 is a diagram of an architecture of a system 100 according to an embodiment of this application. In FIG. 3, an execution device 110 is provided with an input/output (input/output, I/O) interface 112, configured to exchange data with an external device. A user may input data to the I/O interface 112 by using a client device 140. The input data in embodiments of this application may include: each to-be-scheduled task, callable resources, and other parameters.

In a process in which the execution device 110 preprocesses the input data, or in a process in which a calculation module 111 of the execution device 110 performs related processing such as computing (for example, performs function implementation of a neural network in this application), the execution device 110 may invoke data, code, and the like in a data storage system 150 for corresponding processing, and may also store, into the data storage system 150, data, an instruction, and the like that are obtained through the corresponding processing.

Finally, the I/O interface 112 returns a processing result to the client device 140, to provide the processing result for the user.

It should be noted that, for different objectives or different tasks, a training device 120 may generate corresponding target models/rules based on different training data, where the corresponding target models/rules may be used to achieve the foregoing objectives or complete the foregoing tasks, thereby providing required results for the user. The training data may be stored in a database 130, and is derived from training samples collected by a data collection device 160.

In the case shown in FIG. 3, the user may manually specify input data through an interface provided by the I/O interface 112. In another case, the client device 140 may automatically send the input data to the I/O interface 112. If the client device 140 is required to obtain authorization of the user before automatically sending the input data, the user may set a corresponding permission in the client device 140. The user may view, on the client device 140, a result output by the execution device 110, and a specific presentation form may be a specific manner such as display, sound, or action. The client device 140 may alternatively serve as a data collection end, to collect, as new sample data, the input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete calculation work of the calculation module 111. The chip may alternatively be disposed in the training device 120 shown in FIG. 3, to complete training work of the training device 120 and output a target model/rule.

The neural network processing unit NPU is mounted to a host central processing unit (central processing unit, CPU) (host CPU) as a coprocessor, and the host CPU assigns a task. A core part of the NPU is an operation circuit, and a controller controls the operation circuit to extract data in a memory (a weight memory or an input memory) and perform an operation.

In some implementations, the operation circuit includes a plurality of processing units (process engine, PE) inside. In some implementations, the operation circuit is a two-dimensional systolic array. The operation circuit may alternatively be a one-dimensional systolic array or another electronic circuit that can perform mathematical operation such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and buffers the data on each PE in the operation circuit. The operation circuit fetches data of the matrix A from an input memory, to perform a matrix operation on the matrix B, and stores an obtained partial result or an obtained final result of the matrix in an accumulator (accumulator).

A vector calculation unit may perform further processing on an output of the operation circuit, for example, vector multiplication, vector addition, exponential operation, logarithm operation, and size comparison. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store processed output vectors into a unified buffer. For example, the vector calculation unit may apply a non-linear function to the output of the operation circuit, such as vectors whose values are accumulated, to generate an activation value. In some implementations, the vector calculation unit generates a normalized value, a merged value, or both. In some implementations, the processed output vectors can be used as an activation input to the operation circuit, for example, for use in subsequent layers in the neural network.

A unified memory is configured to store input data and output data.

For weight data, a direct memory access controller (direct memory access controller, DMAC) transfers input data in the external memory to the input memory and/or the unified memory, stores, into the weight memory, weight data in the external memory, and stores, into the external memory, data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions buffered in the instruction fetch buffer, to control a working process of the operation accelerator.

Usually, the unified memory, the input memory, the weight memory, and the instruction fetch buffer are all on-chip (On-Chip) memories. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include neurons. The neuron may be an operation unit that uses xs and an intercept of 1 as an input. An output of the operation unit may be as follows:

$$h_{W,b}(x) = f\left(W^T x\right) = f\left(\sum\nolimits_{s=1}^{n} W_s x_s + b\right) \qquad (1)$$

where s=1, 2, ..., n, n is a natural number greater than 1, Ws is a weight of xs, and b is a bias of the neuron. f is an activation function (activation function) of the neuron, and is used to introduce a non-linear characteristic into the neural network, to convert an input signal in the neuron into an output signal. The output signal of the activation function may serve as an input of a next convolutional layer. The activation function may be a sigmoid function. The neural network is a network formed by connecting many single neurons together. To be specific, an output of a neuron may be an input of another neuron. An input of each neuron may be connected to a local acceptance domain of a previous layer, to extract a feature of the local acceptance domain. The local acceptance domain may be a region including several neurons.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations include: 1: dimension increasing/dimension reduction; 2: scaling up/scaling down; 3: rotation; 4: translation; and 5: "bending". The operation 1, the operation 2, and the operation 3 are performed by $Wx$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector indicates a weight value of a neuron at this layer of the neural network. The vector $W$ determines space transformation from the input space to the output space described above. In other words, a weight $W$ at each layer controls how to transform space. An objective of training the neural network is to finally obtain a weight matrix (a weight matrix formed by vectors $W$ at many layers) at all layers of a trained neural network. Therefore, a training process of the neural network is essentially a manner of learning of control of space transformation, and more specifically, learning of a weight matrix.

Because it is expected that an output of the neural network is close, to the greatest extent, to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, that is, a parameter is preconfigured for each layer of the neural network). For example, if the predicted value of the network is high, the weight vector is adjusted to lower the predicted value until the neural network can predict the target value that is actually expected. Therefore, "how to obtain, through comparison, a difference between a predicted value and a target value" needs to be predefined. In this case, a loss function (loss function) or an objective function (objective function) needs to be used. The loss function and the objective function are important equations used to measure a difference between a predicted value and a target value. The loss function is used as an example. A higher output value (loss) of the loss function indicates a larger difference. Therefore, training of the neural network is a process of minimizing the loss.

(2) Back propagation algorithm

In a training process, a neural network may correct values of parameters in an initial neural network model by using an error back propagation (back propagation, BP) algorithm, so that a reconstruction error loss of the neural network model becomes increasingly small. Specifically, an input signal is forward transferred until the error loss is generated in an output, and the parameters in the initial neural network model are updated through back propagation of information about the error loss, to converge the error loss. The back propagation algorithm is an error-loss-centered back propagation motion intended to obtain parameters, such as a weight matrix, of an optimal neural network model.

The following describes the method provided in this application from a neural network training side and a neural network application side.

The model training method provided in embodiments of this application relates to data sequence processing, and may be specifically applied to a method such as data training, machine learning, or deep learning, to perform symbolized and formalized intelligent information modeling, extraction, preprocessing, training, and the like on training data (for example, information that is associated with the target object and that is in the model training method provided in embodiments of this application), and finally obtain a trained neural network (for example, a target model in the model training method provided in embodiments of this application). In addition, in the object model rotation method provided in embodiments of this application, input data (for example, the information that is associated with the target object and that is in the object model rotation method provided in embodiments of this application) may be input into the trained neural network by using the foregoing trained neural network, to obtain output data (for example, the rotated n-dimensional model of the target object in the object model rotation method provided in embodiments of this application). It should be noted that, the model training method and the object model rotation method provided in embodiments of this application are inventions generated based on a same idea, or may be understood as two parts in a system, or two phases: such as a model training phase and a model application phase, of an overall procedure.

FIG. 4 is a schematic flowchart of an object model rotation method according to an embodiment of this application. As shown in FIG. 4, a giant method includes the following steps.

401: Obtain information about a target object in a first state.

In this embodiment, when object model rotation needs to be performed for the target object, information about the target object in the first state (which may also be referred to as a current state or a real-time state) may be first obtained. It should be noted that the target object may serve as both an information collector and a subject of information collection. In this case, the information about the target object in the first state includes two types of information. A first type of information is information (collected by another object) about the target object in the first state, and a second type of information is information (about another object) collected by the target object in the first state.

The first type of information may be n-dimensional data (n is a positive integer greater than or equal to 2) of the target object in the first state. When n is 2, 2-dimensional data may be an image, a video, a 2-dimensional key point, or the like. When n is 3, 3-dimensional data may be a point cloud, a 3-dimensional key point, or the like. A value of n may also be 4, 5, or the like. Details are not described herein. For example, assuming that the target object is a person, an image of the currently moving person may be obtained. For another example, assuming that the target object is a vehicle, a video, or the like of the currently traveling vehicle may be obtained. For still another example, assuming that the target object is a cat, a point cloud, or the like of the currently jumping cat may be obtained.

The second type of information may be n-dimensional data collected by the target object in the first state. Similarly, when n is 2, 2-dimensional data may be an image, a video, a 2-dimensional key point, or the like. When n is 3, 3-dimensional data may be a point cloud, a 3-dimensional key point, or the like. A value of n may also be 4, 5, or the like. Details are not described herein again. For example, assuming that the target object is a camera, an image captured by the camera that is currently in a particular pose may be obtained. For another example, assuming that the target object is a lidar, a point cloud, or the like acquired by the lidar that is currently in a particular pose may be obtained.

402: Process the information by using a target model, to obtain a first matrix, where the first matrix is an n-order matrix, and n is a positive integer greater than or equal to 2.

After the information about the target object in the first state is obtained, the information about the target object in the first state may be input into the target model (a trained neural network model) to perform a series of processing (for example, feature extraction) on the information about the target object in the first state by using the target model, to obtain the first matrix. It should be noted that the first matrix output by the target model is an n-order matrix. In other words, the first matrix is a matrix with n rows and n columns. It may be understood that, in the n×n elements included in the first matrix, n elements in the first column form the 1st first column vector, n elements in the second column form the 2nd first column vector, n elements in the third column form the 3rd first column vector, ..., and n elements in an nth column form an nth first column vector. In other words, the first matrix includes n first column vectors. Because the first matrix is an ordinary matrix, the n first column vectors included in the first matrix do not need to meet any condition.

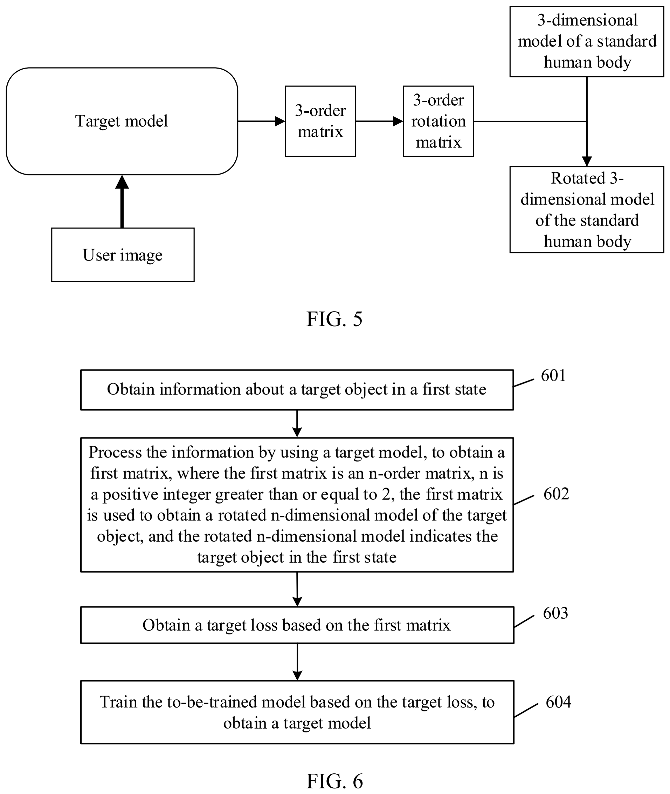

For example, as shown in FIG. 5 (FIG. 5 is a diagram of an application example of an object model rotation method according to an embodiment of this application), after an image of a particular walking user is obtained, the image of the user may be input into the target model. After the image is processed by the target model, a 3-order matrix (a pseudo rotation matrix), namely, a matrix with three rows and three columns, may be output. The matrix includes a column vector a1, a column vector a2, and a column vector a3, where a1 includes an element a11, an element a21, and an element a31, a2 includes an element a12, an element a22, and an element a32, and a3 includes an element a13, an element a23, and an element a33.

403: Orthogonalize the first matrix to obtain a second matrix, where the second matrix is an n-order rotation matrix.

Because the first matrix is a pseudo rotation matrix rather than a real rotation matrix, if the first matrix is directly used to rotate an n-dimensional model of the target object, the model is distorted (for example, a skeleton of model is lengthened or shortened). To resolve this problem, unbiased Gram-Schmidt orthogonalization (Unbiased Gram-Schmidt Orthogonalization) may be performed on the first matrix, to obtain the second matrix. It should be noted that the second matrix is an n-order rotation matrix. In other words, the second matrix is a rotation matrix with n rows and n columns. It may be understood that, in the n×n elements included in the second matrix, n elements in the first column form the 1st second column vector, n elements in the second column form the 2nd second column vector, n elements in the third column form the 3rd second column vector, ..., and n elements in an nth column form an nth second column vector. In other words, the second matrix includes n second column vectors, that is, the second matrix includes n second column vectors. Because the second matrix is a rotation matrix, the n second column vectors included in the second matrix may meet at least one of the following conditions:

(a) The n second column vectors are orthogonal to each other. In other words, in the n second column vectors, a vector product of any two second column vectors is zero. (b) A magnitude of each of the n second column vectors is 1. In other words, for any second column vector, a result of a square root of a sum of squares of all elements included in the second column vector is one. (c) The n second column vectors form an n-dimensional coordinate system. For example, when n is 3, three second column vectors form a right-handed coordinate system.

Still as shown in the foregoing example, after the 3-order matrix is obtained, unbiased Gram-Schmidt orthogonalization may be performed on the 3-order matrix, to obtain a 3-order rotation matrix, that is, a rotation matrix with three rows and three columns. The rotation matrix includes a column vector a'1, a column vector a'2, and a column vector a'3, where a'1 includes an element a'11, an element a'21, and an element a'31, a'2 includes an element a'12, an element a'22, and an element a'32, and a'3 include an element a'13, an element a'23, and an element a'33.

Specifically, the second matrix may be obtained in the following manner:

(1) After the n first column vectors are obtained, first calculation may be performed on the 1st first column vector to the nth first column vector, to obtain the 1st second column vector.

A process of first calculation may include:

(1.1) After the n first column vectors are obtained, cross multiplication may be performed on the 2nd first column vector to the nth first column vector, to obtain the 1st third column vector. Cross multiplication may be implemented by using the following formula:

$$n-cross(p_2, ..., p_n) \qquad (2)$$

In the foregoing formula, $n - cross(p_2, ..., p_n)$ is the 1st third column vector, $p_2$ is the 2nd first column vector, and $p_n$ is the nth first column vector.

(1.2) After the 1st third column vector is obtained, weighted averaging may be performed on the 1st third column vector and the 1st first column vector, to obtain the 1st fourth column vector. Weighted averaging may be implemented by using the following formula (it is assumed that a weight of each column vector is 0.5 for example description, and in an actual application, the weight of each column vector may be set based on an actual requirement, and is not limited herein):

$$avg(p_1) = \frac{1}{2}(n - cross(p_2, \dots, p_n) + p_1) \qquad (3)$$

In the foregoing formula, $avg(p_1)$ is the 1st fourth column vector, and $p_1$ is the 1st first column vector.

(1.3) After the 1st fourth column vector is obtained, the 1st fourth column vector may be normalized, to obtain the 1st second column vector. Normalization may be implemented by using the following formula:

$$r_1 = N(avg(p_1)) \qquad (4)$$

In the foregoing formula, $r_1$ is the 1st second column vector.

(2) After the 1st second column vector is obtained, second calculation may be performed on the 1st second column vector and the 2nd first column vector to the nth first column vector, to obtain the 2nd second column vector. After the 2nd second column vector is obtained, second calculation may be performed on the 1st second column vector to the 2nd second column vector, and the 3rd first column vector to the nth first column vector, to obtain the 3rd second column vector, ...; and after an (n-2)th second column vector is obtained, second calculation may be performed on the 1st second column vector to the (n-2)th second column vector, and an (n-1)th first column vector to the nth first column vector, to obtain the (n-1)th second column vector.

It can be learned that processes of obtaining the 2nd second column vector to the (n-1)th second column vector are similar. The following uses any second column vector for example description, and the second column vector is referred to as an ith second column vector (i=2, ..., n-1). In this case, a process of second calculation may include:

(2.1) After the (i-1)th second column vector is obtained, cross multiplication may be performed on the 1st second column vector to the (i-1)th second column vector and an (i+1)th first column vector to the nth first column vector, to obtain an ith third column vector. Cross multiplication may be implemented by using the following formula:

$$n - cross(r_1, \dots, r_{i-1}, p_{i+1}, \dots, p_n) \qquad (5)$$

In the foregoing formula, $n\text{-}cross(r_1, \dots, p_{i-1}, p_{i+1}, \dots, p_n)$ is the ith third column vector, $r_1$, is the 1st second column vector, $r_{i-1}$ is the (i-1)th second column vector, $p_{i+1}$ is the (i+1)th first column vector, and $p_n$ is the nth first column vector.

(2.2) After the ith third column vector is obtained, the ith third column vector and the ith first column vector may be averaged, to obtain an ith fourth column vector. Weighted averaging may be implemented by using the following formula (it is assumed that a weight of each column vector is 0.5 for example description, and in an actual application, the weight of each column vector may be set based on an actual requirement, and is not limited herein):

$$avg(p_i) = \frac{1}{2}(n - cross(r_1, \dots, r_{i-1}, p_{i+1}, \dots, p_n) + p_i) \qquad (6)$$

In the foregoing formula, $avg(p_i)$ is the ith fourth column vector, and $p_i$ is the ith first column vector.

(2.3) After the ith fourth column vector is obtained, the ith fourth column vector may be projected to the 1st second column vector to the (i-1)th second column vector, and projection results are added, to obtain an ith fifth column vector. Projection and addition may be implemented by using the following formula:

$$\sum_{j=1}^{i-1}(r_j \cdot avg(p_i))r_j \qquad (7)$$

In the foregoing formula, $\sum_{j=1}^{i-1}(r_j \cdot avg(p_i))r_j$ is the ith fifth column vector, $r_j$ is a jth second column vector (j=1, ..., i-1), and $(r_j \cdot avg(p_i))r_j$ is a projection result obtained by projection of the ith fourth column vector to the jth second column vector.

(2.4) After the ith fifth column vector is obtained, the ith fifth column vector may be subtracted from the ith fourth column vector, to obtain an ith sixth column vector. Subtraction may be implemented by using the following formula:

$$avg(p_i) - \sum_{j=1}^{i-1}(r_j \cdot avg(p_i))r_j \qquad (8)$$

In the foregoing formula, $avg(p_i) - \sum_{j=1}^{i-1}(r_j \cdot avg(p_i))r_j$ is the $i^{th}$ sixth column vector.

(2.5) After the $i^{th}$ sixth column vector is obtained, the $i^{th}$ sixth column vector is normalized, to obtain the $i^{th}$ second column vector. Normalization may be implemented by using the following formula:

$$r_i = N(avg(p_i) - \sum_{j=1}^{i-1}(r_j \cdot avg(p_i))r_j) \qquad (9)$$

In the foregoing formula, $r_i$ is the $i^{th}$ second column vector. Step (2.1) to step (2.5) are repeatedly performed, and the $2^{nd}$ second column vector to the $(n-1)^{th}$ second column vector can be finally obtained.

(3) The $1^{st}$ second column vector to the $(n-1)^{th}$ second column vector can be obtained after step (1) and step (2). Therefore, third calculation may be performed on the $1^{st}$ second column vector to the $(n-1)^{th}$ second column vector, to obtain the $n^{th}$ second column vector.

A process of second calculation may include:
After the $1^{st}$ second column vector to the $(n-1)^{th}$ second column vector are obtained, cross multiplication may be performed on the $1^{st}$ second column vector to the $(n-1)^{th}$ second column vector, to obtain the $n^{th}$ second column vector. Cross multiplication may be implemented by using the following formula:

$$r_n = n - cross(r_1, \dots, r_{n-1}) \qquad (10)$$

In the foregoing formula, $r_n$ is the $n^{th}$ second column vector. In this way, the $1^{st}$ second column vector to the $n^{th}$ second column vector that is, the second matrix, can be obtained.

404: Rotate a preset n-dimensional model of the target object based on the second matrix, to obtain a rotated n-dimensional model of the target object, where the preset n-dimensional model indicates the target object in a second state, and the rotated n-dimensional model indicates the target object in the first state.

After the second matrix is obtained, the preset n-dimensional model of the target object may be rotated directly by using the second matrix, to obtain the rotated n-dimensional model of the target object. It should be noted that the preset n-dimensional model of the target object indicates the target object in the second state (which may also be referred to as a preset state or an initial state), and the rotated n-dimensional model of the target object indicates the target object in the first state. In this way, object model rotation for the target object is completed.

Still as in the foregoing example, after the 3-order rotation matrix is obtained, a 3-dimensional model (3D points) of a standard human body may be rotated directly by using the rotation matrix, to obtain a rotated 3-dimensional model of the standard human body. The 3-dimensional model of the standard human body indicates a user in a static state (for example, two feet of the user stand and both hands are spread), and the rotated 3-dimensional model of the standard human body indicates a user in a moving state (for example, the two feet of the user are walking).

In addition, the target model (for example, ours in Table 1 and Table 2) provided in this embodiment of this application may be further compared with models (for example, GS, SVD, and the like in Table 1 and Table 2) provided in a related technology, and comparison results are shown in Table 1 and Table 2.

Table 1

|  | PA-MPJPE | MPJPE | PVE |
|---|---|---|---|
| GS | 57.5 | 91.1 | 106 |
| SVD | 56.7 | 88.7 | 104.8 |
| Ours | 52.6 (-4.9) | 85.5 (-5.6) | 100.6 (-5.4) |

Table 2

|  | PA-MPJPE | Latency (ms) |
|---|---|---|
| Identity | 57 | 0 |
| GS | 55.6 | 0.52 |

(continued)

| | PA-MPJPE | Latency (ms) |
|---|---|---|
| SVD | 54.8 | 778.4 |
| Unbiased GS (Ours) | 54.8 | 0.58 |

Based on Table 1 and Table 2, it can be learned that performance (precision and speed) of the target model provided in this embodiment of this application is better than performance of the models provided in the related technology.

In this embodiment of this application, when object model rotation needs to be performed on the target object, the information about the target object in the first state may be first obtained, and the information is input into the target model. Next, the information may be processed by using a target model, to obtain a first matrix, where the first matrix is an n-order matrix, and n is a positive integer greater than or equal to 2. Then, the first matrix may be orthogonalized to obtain the second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an n×n matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

The foregoing describes in detail the object model rotation method provided in embodiments of this application. The following describes a model training method provided in embodiments of this application. FIG. 6 is a schematic flowchart of a model training method according to an embodiment of this application. As shown in FIG. 6, the method includes the following steps.

601: Obtain information about a target object in a first state.

In this embodiment, when a to-be-trained model (a neural network model that needs to be trained) needs to be trained, a batch of training data may be first obtained, where the batch of training data includes the information about the target object in the first state. It should be noted that a rotated real n-dimensional model and a real matrix of the target object are known, the real matrix is an n-order matrix (that is, an n×n matrix), and the rotated real n-dimensional model of the target object may be used to accurately simulate (indicate) the target object in the first state.

In a possible implementation, the information about the target object in the first state includes at least one of the following: n-dimensional data of the target object in the first state and n-dimensional data collected by the target object in the first state.

For a description of step 601, refer to a related description part of step 401 in the embodiment shown in FIG. 4. Details are not described herein again.

602: Process the information by using a target model, to obtain a first matrix, where the first matrix is an n-order matrix, n is a positive integer greater than or equal to 2, the first matrix is used to obtain a rotated n-dimensional model of the target object, and the rotated n-dimensional model indicates the target object in the first state.

After the information about the target object in the first state is obtained, the information about the target object in the first state may be input into the to-be-trained model. In this case, the to-be-trained model may process (for example, feature extraction) the information about the target object in the first state, to obtain the first matrix. The first matrix is an n-order matrix, and n is a positive integer greater than or equal to 2.

For a description of step 602, refer to a related description part of step 402 in the embodiment shown in FIG. 4. Details are not described herein again.

603: Obtain a target loss based on the first matrix.

After the first matrix is obtained, the first matrix may be further processed, to obtain the target loss.

Specifically, the target loss may be obtained in the following manners:

(1) After the first matrix is obtained, a preset n-dimensional model of the target object is rotated directly by using the first matrix, to obtain a rotated n-dimensional model of the target object. It should be noted that the preset n-dimensional model of the target object may be used to accurately simulate the target object in a second state, and the rotated n-dimensional model of the target object may be used to roughly simulate the target object in the first state.

After the rotated n-dimensional model of the target object is obtained, because the rotated real n-dimensional model of the target object is known, the rotated n-dimensional model of the target object and the rotated real n-dimensional model of the target object may be calculated by using a preset first loss function, to obtain the target loss. The target loss indicates a difference between the rotated n-dimensional model of the target object and the rotated real n-dimensional model of the target object.

(2) After the first matrix is obtained, the first matrix and the real matrix are calculated by using a preset second loss function, to obtain the target loss. The target loss indicates a difference between the first matrix and the real matrix.

604: Train the to-be-trained model based on the target loss, to obtain a target model.

After the target loss is obtained, parameters of the to-be-trained model may be updated based on the target loss, to obtain a to-be-trained model with updated parameters, and the to-be-trained model with updated parameters is continuously trained by using a next batch of training data until a model training condition (for example, target loss convergence) is met, to obtain the target model in the embodiment shown in FIG. 4.

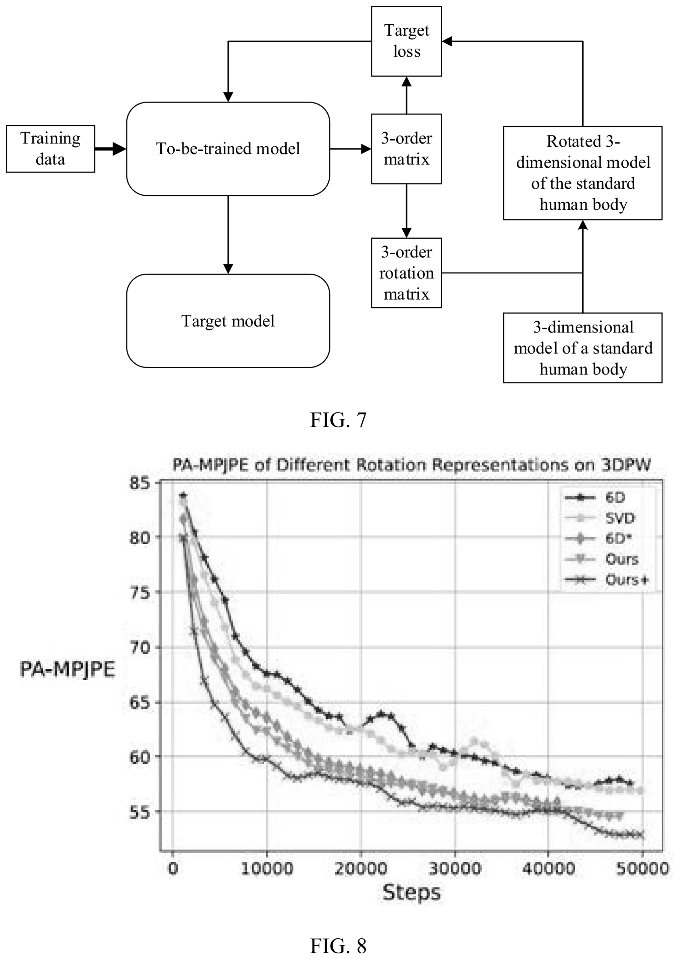

For example, as shown in FIG. 7 (FIG. 7 is a diagram of an application example of a model training method according to an embodiment of this application, and FIG. 7 is obtained through drawing based on FIG. 5), after the training data is obtained, the training data (for example, an image of a moving user) may be input to the to-be-trained model, and the to-be-trained model may directly output a 3-order matrix (a pseudo rotation matrix). In this case, the target loss may be constructed directly by using the 3-order matrix, or a 3-dimensional model of a standard human body is rotated by using the 3-order matrix, to obtain a rotated 3-dimensional model of the standard human body, and the rotated 3-dimensional model of the standard human body is directly used to construct the target loss. Then, the to-be-trained model is trained based on the target loss until the target model is obtained.

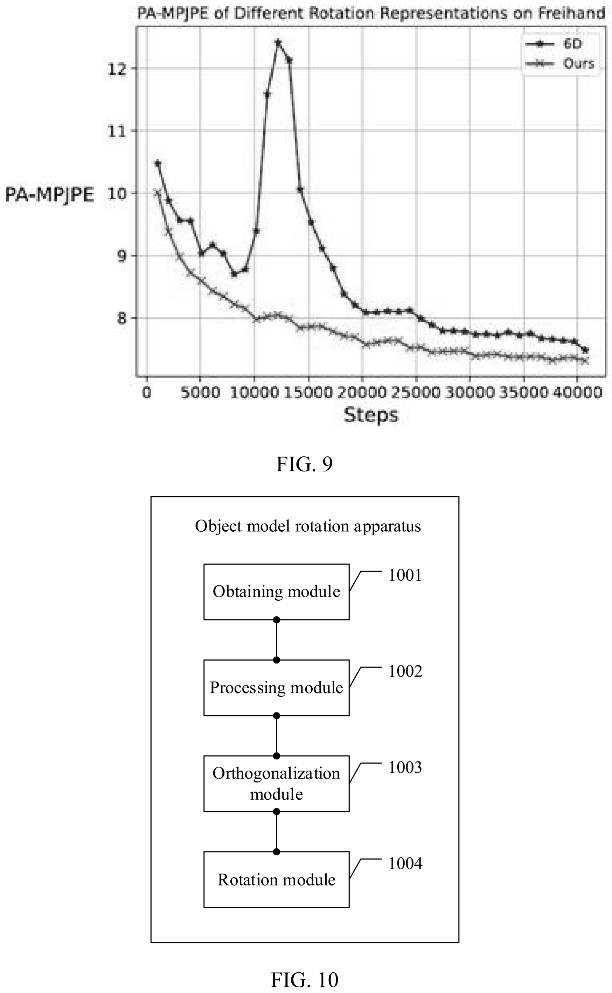

In addition, the model training method (for example, ours in FIG. 8 and FIG. 9) provided in this embodiment of this application may be further compared with a model training method (for example, 6D and SVD in FIG. 8 and FIG. 9) provided in the related technology. Comparison results are shown in FIG. 8 and FIG. 9 (FIG. 8 is a diagram of a comparison result according to an embodiment of this application, and FIG. 9 is another diagram of a comparison result according to an embodiment of this application). It can be learned that the training process of the target model provided in this embodiment of this application converges faster and more stably, and has a lower error.

The target model obtained through training in this embodiment of this application has a rotation estimation function. Specifically, when object model rotation needs to be performed on the target object, the information about the target object in the first state may be first obtained, and the information is input into the target model. Next, the information may be processed by using the target model, to obtain the first matrix, where the first matrix is an n-order matrix, and n is a positive integer greater than or equal to 2. Then, the first matrix may be orthogonalized to obtain the second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an n×n matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

The foregoing describes in detail the object model rotation method and the model training method provided in embodiments of this application. The following describes an object model rotation apparatus and a model training apparatus provided in embodiments of this application. FIG. 10 is a diagram of a structure of an object model rotation apparatus according to an embodiment of this application. As shown in FIG. 10, the apparatus includes:

an obtaining module 1001, configured to obtain information about a target object in a first state;
a processing module 1002, configured to process the information by using a target model, to obtain a first matrix, where the first matrix is an n-order matrix, and n is a positive integer greater than or equal to 2;
an orthogonalization module 1003, configured to orthogonalize the first matrix, to obtain a second matrix, where the second matrix is an n-order rotation matrix; and
a rotation module 1004, configured to rotate a preset n-dimensional model of the target object based on the second matrix, to obtain a rotated n-dimensional model of the target object, where the preset n-dimensional model indicates the target object in a second state, and the rotated n-dimensional model indicates the target object in the first state.

In this embodiment of this application, when object model rotation needs to be performed on the target object, the information about the target object in the first state may be first obtained, and the information is input into the target model. Next, the information may be processed by using the target model, to obtain the first matrix, where the first matrix is an n-order matrix, and n is a positive integer greater than or equal to 2. Then, the first matrix may be orthogonalized to obtain the second matrix, where the second matrix is an n-order rotation matrix. Finally, the preset n-dimensional model of the target object may be rotated directly based on the second matrix, to obtain the rotated n-dimensional model of the target object. The preset n-dimensional model of the target object indicates the target object in the second state, and the rotated n-dimensional model of the target object indicates the target object in the first state. In the foregoing process, an output of the target model is an n$\times$n matrix. The matrix may be considered as a pseudo rotation matrix. Therefore, the matrix may be directly used to complete training of the target model without undergoing orthogonalization processing. It can be learned that orthogonalization processing does not occur in a training process of the target model, and various problems caused by the orthogonalization processing in the model training process can be avoided. Obtaining the target model through training in this manner helps improve performance of the target model. In other words, the target model can accurately complete rotation estimation, to accurately complete object model rotation for the target object.

In a possible implementation, the first matrix includes n first column vectors, the second matrix includes n second column vectors, and the orthogonalization module is configured to: perform first calculation on the $1^{st}$ first column vector to an $n^{th}$ first column vector, to obtain the $1^{st}$ second column vector; perform second calculation on the $1^{st}$ second column vector to an $(i-1)^{th}$ second column vector and an $i^{th}$ first column vector to the $n^{th}$ first column vector, to obtain an $i^{th}$ second column vector, where i=2, ..., n-1; and perform third calculation on the $1^{st}$ second column vector to the $(n-1)^{th}$ second column vector, to obtain an $n^{th}$ second column vector.

In a possible implementation, the orthogonalization module is configured to: perform cross multiplication on the $2^{nd}$ first column vector to the $n^{th}$ first column vector, to obtain the $1^{st}$ third column vector; perform weighted averaging on the $1^{st}$ third column vector and the $1^{st}$ first column vector, to obtain the $1^{st}$ fourth column vector; and normalize the $1^{st}$ fourth column vector, to obtain the $1^{st}$ second column vector.

In a possible implementation, the orthogonalization module is configured to: perform cross multiplication on the $1^{st}$ second column vector to the $(i-1)^{th}$ second column vector and an $(i+1)^{th}$ first column vector to the $n^{th}$ first column vector, to obtain an $i^{th}$ third column vector; average the $i^{th}$ third column vector and the $i^{th}$ first column vector, to obtain an $i^{th}$ fourth column vector; project the $i^{th}$ fourth column vector to the $1^{st}$ second column vector to the $(i-1)^{th}$ second column vector, and add projection results, to obtain an $i^{th}$ fifth column vector; subtract the $i^{th}$ fifth column vector from the $i^{th}$ fourth column vector, to obtain an $i^{th}$ sixth column vector; and normalize the $i^{th}$ sixth column vector, to obtain the $i^{th}$ second column vector.

In a possible implementation, the orthogonalization module is configured to perform cross multiplication on the $1^{st}$ second column vector to the $(n-1)^{th}$ second column vector, to obtain the $n^{th}$ second column vector.

In a possible implementation, the n second column vectors meet at least one of the following conditions: the n second column vectors are orthogonal to each other; a magnitude of each of the n second column vectors is 1; and the n second column vectors form an n-dimensional coordinate system.

In a possible implementation, the information includes at least one of the following: n-dimensional data of the target object in the first state and n-dimensional data collected by the target object in the first state.

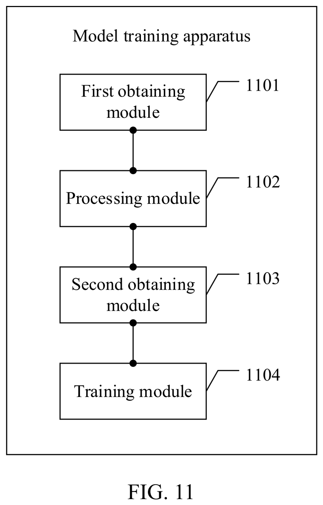

FIG. 11 is a diagram of a structure of a model training apparatus according to an embodiment of this application. As shown in FIG. 11, the apparatus includes:

a first obtaining module 1101, configured to obtain information about a target object in a first state;
a processing module 1102, configured to process the information by using a target model, to obtain a first matrix, where the first matrix is an n-order matrix, n is a positive integer greater than or equal to 2, the first matrix is used to obtain a rotated n-dimensional model of the target object, and the rotated n-dimensional model indicates the target object in the first state;
a second obtaining module 1103, configured to obtain a target loss based on the first matrix; and
a training module 1104, configured to train the to-be-trained model based on the target loss, to obtain a target model.

In a possible implementation, the second obtaining module is configured to: rotate a preset n-dimensional model of the target object directly by using the first matrix, to obtain the rotated n-dimensional model of the target object, where the preset n-dimensional model indicates the target object in a second state; and obtain the target loss based on the rotated n-dimensional model and a rotated real n-dimensional model of the target object, where the rotated real n-dimensional model indicates the target object in the first state, and the target loss indicates a difference between the rotated n-dimensional model and the rotated real n-dimensional model.

In a possible implementation, the second obtaining module is configured to obtain the target loss based on the first matrix and a real matrix, where the target loss indicates a difference between the first matrix and the real matrix, and the real matrix is an n-order matrix.

In a possible implementation, the information includes at least one of the following: n-dimensional data of the target object in the first state and n-dimensional data collected by the target object in the first state.

It should be noted that, content such as information exchange between the modules/units of the apparatuses and an execution process is based on the same concept as the method embodiments of this application, and produces the same technical effect as that of the method embodiments of this application. For specific content, refer to the foregoing descriptions in the method embodiments of this application. Details are not described herein again.

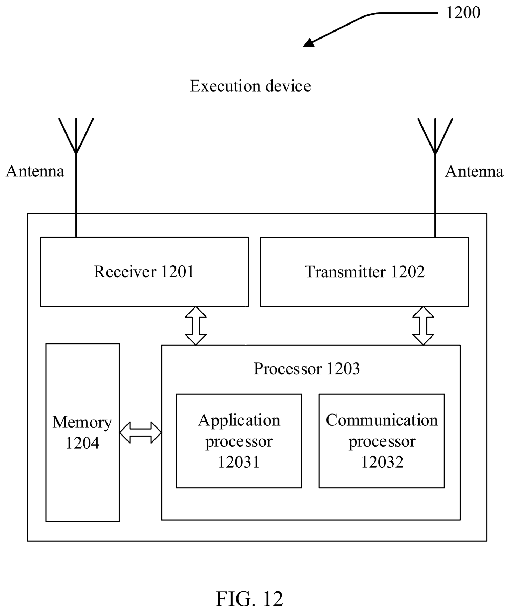

An embodiment of this application further relates to an execution device. FIG. 12 is a diagram of a structure of an execution device according to an embodiment of this application. As shown in FIG. 12, the execution device 1200 may be specifically represented as a mobile phone, a tablet computer, a notebook computer, an intelligent wearable device, a server, or the like. This is not limited herein. The object model rotation apparatus described in the embodiment corresponding to FIG. 10 may be deployed on the execution device 1200, and is configured to implement an object model rotation function in the embodiment corresponding to FIG. 4. Specifically, the execution device 1200 includes a receiver 1201, a transmitter 1202, a processor 1203, and a memory 1204 (where there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. A part of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 1203, or may be implemented by the processor 1203. The processor 1203 may be an integrated circuit chip and has a signal processing capability. In an implementation process, the steps in the foregoing methods may be completed by using an integrated logic circuit of hardware in the processor 1203 or instructions in a form of software. The processor 1203 may be a general-purpose processor, a digital signal processor (digital signal processor, DSP), a microprocessor, or a microcontroller. The processor 1203 may further include an application specific integrated circuit (application specific integrated circuit, ASIC), a field-programmable gate array (field-programmable gate array, FPGA) or another programmable logic device, a discrete gate, or a transistor logic device, or a discrete hardware component. The processor 1203 may implement or perform the methods, the steps, and the logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps in the foregoing methods in combination with hardware of the processor 1203.

The receiver 1201 may be configured to: receive input digital or character information, and generate a signal input related to related settings and function control of the execution device. The transmitter 1202 may be configured to output digital or character information through a first interface. The transmitter 1202 may be further configured to send an instruction to a disk group through the first interface, to modify data in the disk group. The transmitter 1202 may further include a display device such as a display.

In this embodiment of this application, in one case, the processor 1203 is configured to obtain the rotated n-dimensional model of the target object by using the target model in the embodiment corresponding to FIG. 4.

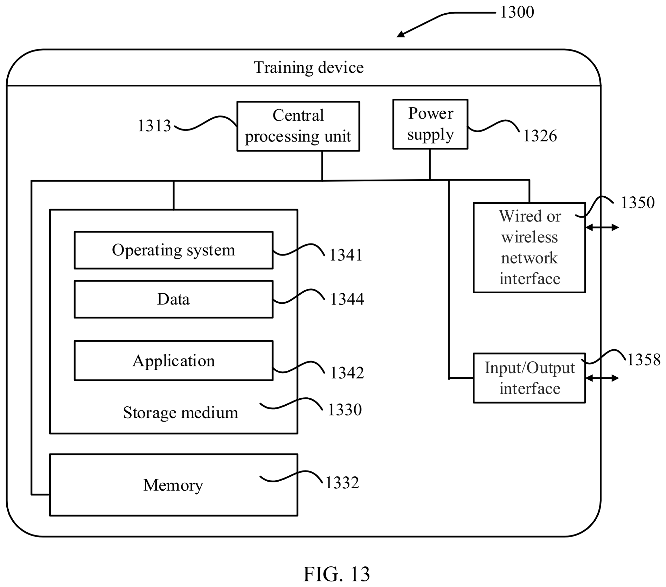

An embodiment of this application further relates to a training device. FIG. 13 is a diagram of a structure of a training device according to an embodiment of this application. As shown in FIG. 13, the training device 1300 is implemented by one or more servers. The training device 1300 may greatly differ due to different configurations or performance, and may include one or more central processing units (central processing units, CPUs) 1313 (for example, one or more processors), a memory 1332, one or more storage media 1330 (for example, one or more mass storage devices) that store an application 1342 or data 1344. The memory 1332 and the storage medium 1330 may be temporary storage or persistent storage. A program stored in the storage medium 1330 may include one or more modules (not shown in the figure), and each module may include a series of instruction operations performed on the training device. Further, the central processing unit 1313 may be configured to: communicate with the storage medium 1330, and perform the series of instruction operations in the storage medium 1330 on the training device 1300.

The training device 1300 may further include one or more power supplies 1326, one or more wired or wireless network interfaces 1350, one or more input/output interfaces 1358, or one or more operating systems 1341, such as Windows Server™, Mac OS X™, Unix™, Linux™ and FreeBSD™.

Specifically, the training device may perform the model training method in the embodiment corresponding to FIG. 6, to obtain the target model.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. The storage unit may alternatively be a storage unit that is located outside the chip and that is in a wireless access device, for example, a read-only memory (read-only memory, ROM) or another type of static storage device that can store static information and instructions, or a random access memory (random access memory, RAM).

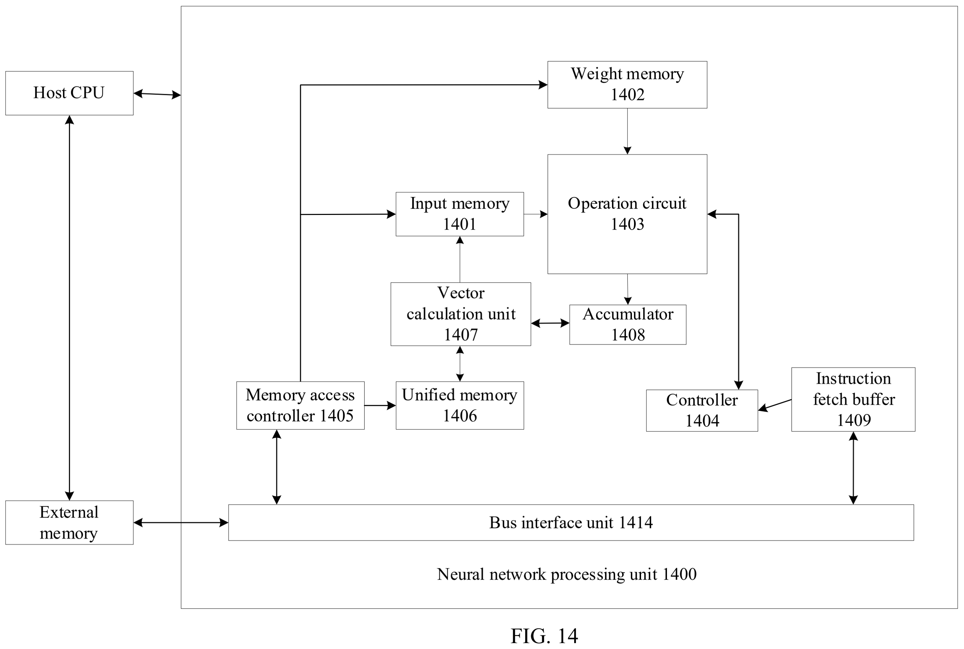

Specifically, refer to FIG. 14. FIG. 14 is a diagram of a structure of a chip according to an embodiment of this application. The chip may be represented as a neural network processing unit NPU 1400. The NPU 1400 is mounted to a host CPU (Host CPU) as a coprocessor, and a task is allocated by the host CPU. A core part of the NPU is an operation circuit 1403. The operation circuit 1403 is controlled by a controller 1404 to extract matrix data in a memory and perform a multiplication operation.

In some implementations, the operation circuit 1403 includes a plurality of processing units (Process Engine, PE) inside. In some implementations, the operation circuit 1403 is a two-dimensional systolic array. The operation circuit 1403 may alternatively be a one-dimensional systolic array or another electronic circuit that can perform mathematical operation such as multiplication and addition. In some implementations, the operation circuit 1403 is a general-purpose matrix processor.

For example, it is assumed that there is an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401, to perform a matrix operation on the matrix B, and stores an obtained partial result or an obtained final result of the matrix in an accumulator (accumulator) 1408.

A unified memory 1406 is configured to store input data and output data. Weight data is transferred to the weight memory 1402 by using a direct memory access controller (Direct Memory Access Controller, DMAC) 1405. The DMAC is transferred to the weight memory 1402. The input data is also transferred to the unified memory 1406 by using the DMAC.

A BIU is a Bus Interface Unit, namely, a bus interface unit 1413, and is configured to perform interaction between an AXI bus and the DMAC and between the AXI bus and an instruction fetch buffer (Instruction Fetch Buffer, IFB) 1409.

The bus interface unit 1413 (Bus Interface Unit, BIU for short) is used by the instruction fetch buffer 1409 to obtain an instruction from an external memory, and is further used by the direct memory access controller 1405 to obtain raw data of the input matrix A or the weight matrix B from the external memory.

The DMAC is mainly configured to transfer input data in the external memory DDR to the unified memory 1406, transfer weight data to the weight memory 1402, or transfer input data to the input memory 1401.

A vector calculation unit 1407 includes a plurality of operation processing units, and when necessary, performs further processing on an output of the operation circuit 1403, for example, vector multiplication, vector addition, exponential operation, logarithm operation, and size comparison. The vector calculation unit 1407 is mainly used for non-convolutional/ fully-connected layer network calculation in a neural network, such as batch normalization (batch normalization), pixel-level summation, and upsampling of a predicted label plane.

In some implementations, the vector calculation unit 1407 can store processed output vectors into the unified memory 1406. For example, the vector calculation unit 1407 may apply a linear function or a non-linear function to the output of the operation circuit 1403. For example, linear interpolation is performed on a predicted label plane extracted by a convolutional layer. For another example, vectors whose values are accumulated are used to generate an activation value. In some implementations, the vector calculation unit 1407 generates a normalized value, a pixel-level sum value, or both. In some implementations, the processed output vectors can be used as an activation input to the operation circuit 1403, for example, for use in subsequent layers in the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all of the modules may be selected based on actual requirements, to achieve the objective of the solution of this embodiment. In addition, in the accompanying drawings of the apparatus embodiments provided in this application, a connection relationship between modules indicates that there is communication connection between the modules, and the communication connection may be specifically implemented as one or more communication buses or signal cables.

Based on the descriptions of the foregoing implementations, a person skilled in the art may clearly understand that this application may be implemented by software in addition to necessary universal hardware, or certainly by dedicated hardware, including a dedicated integrated circuit, a dedicated CPU, a dedicated memory, a dedicated component, and the like. Generally, any function that is completed by a computer program can be easily implemented by using corresponding hardware. Moreover, a specific hardware structure used to implement a same function may be in various forms, for example, in a form of an analog circuit, a digital circuit, or a dedicated circuit. However, for this application, software program implementation is a better implementation in most cases. Based on such an understanding, the technical solutions of this application essentially or the part contributing to the conventional technology may be embodied in a form of a software product. The computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, procedures or functions according to embodiments of this application are entirely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An object model rotation method, wherein the method comprises:

   obtaining information about a target object in a first state;
   processing the information by using a target model, to obtain a first matrix, wherein the first matrix is an n-order matrix, and n is a positive integer greater than or equal to 2;
   orthogonalizing the first matrix, to obtain a second matrix, wherein the second matrix is an n-order rotation matrix; and
   rotating a preset n-dimensional model of the target object based on the second matrix, to obtain a rotated n-dimensional model of the target object, wherein the preset n-dimensional model indicates the target object in a second state, and the rotated n-dimensional model indicates the target object in the first state.

2. The method according to claim 1, wherein the first matrix comprises n first column vectors, the second matrix comprises n second column vectors, and orthogonalizing the first matrix, to obtain the second matrix corresponding to the target object comprises:

   performing first calculation on the 1st first column vector to an nth first column vector, to obtain the 1st second column vector;

performing second calculation on the 1st second column vector to an (i-1)th second column vector and an ith first column vector to the nth first column vector, to obtain an ith second column vector, wherein i=2, ..., n-1; and
performing third calculation on the 1st second column vector to the (n-1)th second column vector, to obtain an nth second column vector.

3. The method according to claim 2, wherein performing first calculation on the 1st first column vector to the nth first column vector, to obtain the 1st second column vector comprises:

performing cross multiplication on the 2nd first column vector to the nth first column vector, to obtain the 1st third column vector;
performing weighted averaging on the 1st third column vector and the 1st first column vector, to obtain the 1st fourth column vector; and
normalizing the 1st fourth column vector, to obtain the 1st second column vector.

4. The method according to claim 2 or 3, wherein performing second calculation on the 1st second column vector to the (i-1)th second column vector and the ith first column vector to the nth first column vector, to obtain the ith second column vector comprises:

performing cross multiplication on the 1st second column vector to the (i-1)th second column vector and an (i+1)th first column vector to the nth first column vector, to obtain an ith third column vector;
averaging the ith third column vector and the ith first column vector, to obtain an ith fourth column vector;
projecting the ith fourth column vector to the 1st second column vector to the (i-1)th second column vector, and adding projection results, to obtain an ith fifth column vector;
subtracting the ith fifth column vector from the ith fourth column vector, to obtain an ith sixth column vector; and
normalizing the ith sixth column vector, to obtain the ith second column vector.

5. The method according to any one of claims 2 to 4, wherein performing third calculation on the 1st second column vector to the (n-1)th second column vector, to obtain the nth second column vector comprises:
performing cross multiplication on the 1st second column vector to the (n-1)th second column vector, to obtain the nth second column vector.

6. The method according to any one of claims 2 to 5, wherein the n second column vectors meet at least one of the following conditions:

the n second column vectors are orthogonal to each other;
a magnitude of each of the n second column vectors is 1; and
the n second column vectors form an n-dimensional coordinate system.

7. The method according to any one of claims 1 to 6, wherein the information comprises at least one of the following: n-dimensional data of the target object in the first state and n-dimensional data collected by the target object in the first state.

8. A model training method, wherein the method comprises:

obtaining information about a target object in a first state;
processing the information by using a target model, to obtain a first matrix, wherein the first matrix is an n-order matrix, n is a positive integer greater than or equal to 2, the first matrix is used to obtain a rotated n-dimensional model of the target object, and the rotated n-dimensional model indicates the target object in the first state;
obtaining a target loss based on the first matrix; and
training the to-be-trained model based on the target loss, to obtain a target model.

9. The method according to claim 8, wherein obtaining the target loss based on the first matrix comprises:

rotating a preset n-dimensional model of the target object directly by using the first matrix, to obtain the rotated n-dimensional model of the target object, wherein the preset n-dimensional model indicates the target object in a second state; and
obtaining the target loss based on the rotated n-dimensional model and a rotated real n-dimensional model of the target object, wherein the rotated real n-dimensional model indicates the target object in the first state, and the target loss indicates a difference between the rotated n-dimensional model and the rotated real n-dimensional model.

10. The method according to claim 8, wherein obtaining the target loss based on the first matrix comprises:
   obtaining the target loss based on the first matrix and a real matrix, wherein the target loss indicates a difference between the first matrix and the real matrix, and the real matrix is an n-order matrix.

11. The method according to any one of claims 8 to 10, wherein the information comprises at least one of the following: n-dimensional data of the target object in the first state and n-dimensional data collected by the target object in the first state.

12. An object model rotation apparatus, wherein the apparatus comprises:

   an obtaining module, configured to obtain information about a target object in a first state;
   a processing module, configured to process the information by using a target model, to obtain a first matrix, wherein the first matrix is an n-order matrix, and n is a positive integer greater than or equal to 2;
   an orthogonalization module, configured to orthogonalize the first matrix, to obtain a second matrix, wherein the second matrix is an n-order rotation matrix; and
   a rotation module, configured to rotate a preset n-dimensional model of the target object based on the second matrix, to obtain a rotated n-dimensional model of the target object, wherein the preset n-dimensional model indicates the target object in a second state, and the rotated n-dimensional model indicates the target object in the first state.

13. The apparatus according to claim 12, wherein the first matrix comprises n first column vectors, the second matrix comprises n second column vectors, and the orthogonalization module is configured to:

   perform first calculation on the 1st first column vector to an $n^{th}$ first column vector, to obtain the 1st second column vector;
   perform second calculation on the 1st second column vector to an $(i-1)^{th}$ second column vector and an $i^{th}$ first column vector to the $n^{th}$ first column vector, to obtain an $i^{th}$ second column vector, wherein i=2, ..., n-1; and
   perform third calculation on the 1st second column vector to the $(n-1)^{th}$ second column vector, to obtain an $n^{th}$ second column vector.

14. The apparatus according to claim 13, wherein the orthogonalization module is configured to:

   perform cross multiplication on the $2^{nd}$ first column vector to the $n^{th}$ first column vector, to obtain the 1st third column vector;
   perform weighted averaging on the 1st third column vector and the 1st first column vector, to obtain the 1st fourth column vector; and
   normalize the 1st fourth column vector, to obtain the 1st second column vector.

15. The apparatus according to claim 13 or 14, wherein the orthogonalization module is configured to:

   perform cross multiplication on the 1st second column vector to the $(i-1)^{th}$ second column vector and an $(i+1)^{th}$ first column vector to the $n^{th}$ first column vector, to obtain an $i^{th}$ third column vector;
   average the $i^{th}$ third column vector and the $i^{th}$ first column vector, to obtain an $i^{th}$ fourth column vector;
   project the $i^{th}$ fourth column vector to the 1st second column vector to the $(i-1)^{th}$ second column vector, and add projection results, to obtain an $i^{th}$ fifth column vector;
   subtract the $i^{th}$ fifth column vector from the $i^{th}$ fourth column vector, to obtain an $i^{th}$ sixth column vector; and
   normalize the $i^{th}$ sixth column vector, to obtain the $i^{th}$ second column vector.

16. The apparatus according to any one of claims 13 to 15, wherein the orthogonalization module is configured to perform cross multiplication on the 1st second column vector to the $(n-1)^{th}$ second column vector, to obtain the $n^{th}$ second column vector.

17. The apparatus according to any one of claims 13 to 16, wherein the n second column vectors meet at least one of the following conditions:

the n second column vectors are orthogonal to each other;
a magnitude of each of the n second column vectors is 1; and
the n second column vectors form an n-dimensional coordinate system.

18. The apparatus according to any one of claims 12 to 17, wherein the information comprises at least one of the following: n-dimensional data of the target object in the first state and n-dimensional data collected by the target object in the first state.

19. A model training apparatus, wherein the apparatus comprises:

a first obtaining module, configured to obtain information about a target object in a first state;
a processing module, configured to process the information by using a target model, to obtain a first matrix, wherein the first matrix is an n-order matrix, n is a positive integer greater than or equal to 2, the first matrix is used to obtain a rotated n-dimensional model of the target object, and the rotated n-dimensional model indicates the target object in the first state;
a second obtaining module, configured to obtain a target loss based on the first matrix; and
a training module, configured to train the to-be-trained model based on the target loss, to obtain a target model.

20. The apparatus according to claim 19, wherein the second obtaining module is configured to:

rotate a preset n-dimensional model of the target object directly by using the first matrix, to obtain the rotated n-dimensional model of the target object, wherein the preset n-dimensional model indicates the target object in a second state; and
obtain the target loss based on the rotated n-dimensional model and a rotated real n-dimensional model of the target object, wherein the rotated real n-dimensional model indicates the target object in the first state, and the target loss indicates a difference between the rotated n-dimensional model and the rotated real n-dimensional model.

21. The apparatus according to claim 19, wherein the second obtaining module is configured to obtain the target loss based on the first matrix and a real matrix, wherein the target loss indicates a difference between the first matrix and the real matrix, and the real matrix is an n-order matrix.

22. The apparatus according to any one of claims 19 to 21, wherein the information comprises at least one of the following: n-dimensional data of the target object in the first state and n-dimensional data collected by the target object in the first state.

23. An object model rotation apparatus, wherein the apparatus comprises a memory and a processor, the memory stores code, the processor is configured to execute the code, and when the code is executed, the object model rotation apparatus performs the method according to any one of claims 1 to 11.

24. A computer storage medium, wherein the computer storage medium stores one or more instructions, and when the instructions are executed by one or more computers, the one or more computers are enabled to perform the method according to any one of claims 1 to 11.

25. A computer program product, wherein the computer program product stores instructions, and when the instructions are executed by a computer, the computer is enabled to perform the method according to any one of claims 1 to 11.

FIG. 1

FIG. 2a

EP 4 697 258 A1

FIG. 2b

300

Execution device 210

Data storage system 250

Communication network

Local device 301

Local device 302

For example

FIG. 2c

Data collection
device <u>160</u>

<u>100</u>

Training sample

Database
<u>130</u>

Training device <u>120</u>

Main
region | Object
category

Client
device
<u>140</u>

User
behavior

Object
category

I/O
interface
<u>112</u>

Execution
device <u>110</u>

CNN feature
extraction model

Data storage
system <u>150</u>

Calculation module <u>111</u>

FIG. 3

Obtain information about a target object in a first state ⟋ 401

Process the information by using a target model, to obtain a
first matrix, where the first matrix is an n-order matrix, and
n is a positive integer greater than or equal to 2 ⟋ 402

Orthogonalize the first matrix to obtain a second matrix,
where the second matrix is an n-order rotation matrix ⟋ 403

Rotate a preset n-dimensional model of the target object
based on the second matrix, to obtain a rotated n-
dimensional model of the target object, where the preset n-
dimensional model indicates the target object in a second
state, and the rotated n-dimensional model indicates the
target object in the first state ⟋ 404

FIG. 4

FIG. 5

FIG. 6

FIG. 7

FIG. 8

FIG. 9

FIG. 10

Model training apparatus

First obtaining module — 1101

Processing module — 1102

Second obtaining module — 1103

Training module — 1104

FIG. 11

1200

Execution device

| Receiver 1201 | Transmitter 1202 |
|---|---|

Processor 1203

| Memory 1204 | Application processor 12031 | Communication processor 12032 |
|---|---|---|

Antenna

Antenna

FIG. 12

1300

Training device

1313 — Central processing unit

Power supply — 1326

Wired or wireless network interface — 1350

Operating system — 1341

Data — 1344

Application — 1342

Storage medium — 1330

Input/Output interface — 1358

Memory — 1332

FIG. 13

FIG. 14

Neural network processing unit 1400

- Instruction fetch buffer 1409
- Controller 1404
- Weight memory 1402
- Operation circuit 1403
- Accumulator 1408
- Input memory 1401
- Vector calculation unit 1407
- Unified memory 1406
- Memory access controller 1405
- Bus interface unit 1414
- Host CPU
- External memory

## INTERNATIONAL SEARCH REPORT

| International application No. |
| --- |
| **PCT/CN2024/092219** |

| | |
| --- | --- |
| **A.** | **CLASSIFICATION OF SUBJECT MATTER** |

G06T 3/60(2024.01)i

According to International Patent Classification (IPC) or to both national classification and IPC

| | |
| --- | --- |
| **B.** | **FIELDS SEARCHED** |

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 模型, 训练, 旋转, 矩阵, 6自由度, 正交, 姿态, 姿势, 估计, 损失; model, train, rotation, matrix, 6D, orthogonalization, posture, estimation, loss

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 116681596 A (HUAWEI TECHNOLOGIES CO., LTD.) 01 September 2023 (2023-09-01) claims 1-25 | 1-25 |
| X | CN 114119999 A (HEBEI UNIVERSITY OF TECHNOLOGY) 01 March 2022 (2022-03-01) claims 9-10, and description, paragraphs [0029]-[0057] | 1, 7, 12, 18, 23-25 |
| X | CN 113158708 A (GUANGZHOU HUYA TECHNOLOGY CO., LTD.) 23 July 2021 (2021-07-23) description, paragraphs [0077]-[0088] | 8-11, 19-25 |
| A | CN 114186189 A (HEFEI LCFC INFORMATION TECHNOLOGY CO., LTD.) 15 March 2022 (2022-03-15) entire document | 1-25 |
| A | CN 113344770 A (MANTIS-VISION TECHNOLOGY CO., LTD.) 03 September 2021 (2021-09-03) entire document | 1-25 |
| A | WO 2019007372 A1 (BEIJING JINGDONG SHANGKE INFORMATION TECHNOLOGY CO., LTD. et al.) 10 January 2019 (2019-01-10) entire document | 1-25 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 July 2024** | **19 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092219**

| Patent document cited in search report | | | Publication date (day/month/year) | Patent family member(s) | Publication date (day/month/year) |
|---|---|---|---|---|---|
| CN | 116681596 | A | 01 September 2023 | None | |
| CN | 114119999 | A | 01 March 2022 | None | |
| CN | 113158708 | A | 23 July 2021 | None | |
| CN | 114186189 | A | 15 March 2022 | None | |
| CN | 113344770 | A | 03 September 2021 | None | |
| WO | 2019007372 | A1 | 10 January 2019 | None | |

Form PCT/ISA/210 (patent family annex) (July 2022)

**EP 4 697 258 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310540964